# EUROPEAN PATENT APPLICATION

(11) **EP 4 216 150 A1**
(43) Date of publication of application: **26.07.2023**
(21) Application number: 21854527.5
(22) Date of filing: 02.08.2021
(51) Int. Cl.: G06T 7/00

(54) **INFORMATION PROCESSING DEVICE, INFORMATION PROCESSING METHOD, AND PROGRAM**

(30) Priority: 07.08.2020 JP 2020134847
(71) Applicant: Hiperdyne Corporation, Tokyo 108-0014 (JP)
(72) Inventor: MIYAJIMA, Yasushi, Tokyo 108-0014 (JP); YAMASHITA, Shingo, Tokyo 108-0014 (JP); IGARASHI, Kazuhiro, Tokyo 108-0014 (JP)
(74) Representative: Meissner Bolte Partnerschaft mbB
(86) International application number: PCT/JP2021/028599
(87) International publication number: WO 2022/030439

(57) **Abstract**

An information processing apparatus 20 including: a storage section 210 storing relationship information in which a spatial relationship among feature points included in a plurality of target objects is associated with meaning information among the plurality of target objects; and a meaning estimation section 238 estimating, based on a spatial relationship among feature points extracted from a plurality of image objects included in an image and the relationship information, a meaning relationship among the plurality of image objects.

## Description

### CROSS-REFERENCE TO RELATED APPLICATION

The present application is based on Japanese Application No. 2020-134847 filed on August 7, 2020, the disclosed content of which is incorporated herein.

### Technical Field

The present invention relates to an information processing apparatus, an information processing method and a program.

### Background Art

Conventionally, there has been a technology for estimating a relationship among a plurality of image objects (for example, person or material body image objects) included in an image.

For example, Patent Literature 1 describes a technology of generating a learned model based on learning data in which an image is associated with a relationship among a plurality of material bodies included in the image, and recognizing a relationships among material bodies included in an image using the learned model.

Patent Literature 2 describes a technology of detecting an area of a person and areas of material bodies included in an image, and determining the person's action according to the person's posture and a positional relationship with the material bodies existing around the person.

### Citation List

### Patent Literature

Patent Literature 1: Japanese Patent Laid-Open No. 2019-101907
Patent Literature 2: Japanese Patent Laid-Open No. 2018-206321

### Summary of Invention

### Technical Problem

In the technology described in Patent Literature 1, however, it is necessary to, in order to cause a learned model to estimate a relationship among various material bodies, cause the model to learn relationships among the material bodies. Therefore, in the technology described in Patent Literature 1, it is not possible to, for a plurality of material bodies, estimate an unknown relationship that has not been learned. In the technology described in Patent Literature 2, it is not possible to determine a person's action in detail because the action is determined based on an area of the person. Therefore, it is thought that a technology capable of estimating a relationship between a person and a material body included in an image in more detail is required.

Therefore, an object of the present invention is to provide an information processing apparatus, an information processing method and a program that make it possible to estimate various relationships in more detail for a plurality of image objects included in an image.

### Solution to Problem

An information processing apparatus according to one aspect of the present invention includes: a storage section storing relationship information in which a spatial relationship among feature points included in a plurality of target objects is associated with meaning information among the plurality of target objects; and a meaning estimation section estimating, based on a spatial relationship among feature points extracted from a plurality of image objects included in an image and the relationship information, a meaning relationship among the plurality of image objects.

According to this aspect, a meaning relationship is estimated based on relationship information specified in advance. Since a user can set various relationship information he desires, it becomes possible to estimate more diverse relationships for a plurality of image objects. Further, for estimation of a relationship among a plurality of image objects, feature point of the image objects are used. Therefore, estimation of a more detailed relationship becomes possible.

In the above aspect, the meaning estimation section may estimate the meaning relationship among the plurality of image objects based on supplementary information accompanying the image objects.

According to this aspect, since information corresponding to image objects is used to estimate a meaning relationship in addition to relationship information, it becomes possible to estimate the meaning relationship in more detail or more accurately.

In the above aspect, the plurality of image objects may include an image object of a person; and the supplementary information may include information about at least any of the person's age, gender, physique, muscle strength, exercise capacity, and wearing or carrying article.

According to this aspect, since supplementary information corresponding to an image object of a person is used, it becomes possible to estimate a meaning relationship in more detail or more accurately.

In the above aspect, the plurality of image objects may include an image object of a person; and the supplementary information may include information about at least any of the person's a position, physique, posture and orientation estimated based on feature points of the image object of the person.

According to this aspect, since supplementary information corresponding to an image object of an actual person is used, it becomes possible to estimate a meaning relationship in more detail or more accurately.

In the above aspect, the plurality of image objects may include an image object of a material body; and the supplementary information may include information about at least any of a weight, material, weight distribution and gravity center of the material body.

According to this aspect, since supplementary information corresponding to an image object of a material body is used, it becomes possible to estimate a meaning relationship in more detail or more accurately.

In the above aspect, the plurality of image objects may include an image object of a material body; and the supplementary information may include information about at least any of a position, size, shape and orientation of the material body estimated based on feature points of the image object of the material body.

According to this aspect, since supplementary information corresponding to an image object of an actual material body is used, it becomes possible to estimate a meaning relationship in more detail or more accurately.

In the above aspect, the plurality of image objects may include an image object of a person and an image object of a material body; and the meaning relationship among the plurality of image objects may include at least any of an action against the material body by the person, a purpose of the action and an impact that the material body gives to the person.

According to this aspect, it becomes possible to estimate a more appropriate meaning relationship.

In the above aspect, the feature points included in the plurality of objects may include a feature point that is given first label information and a feature point that is given second label information, the second label information being in a particular relationship with the first label information; and the meaning estimation section may estimate a meaning relationship between a first image object and a second image object based on a spatial relationship between a feature point that is given the first label information, the feature point being extracted from the first image object, and a feature point of the second image object that is given the second label information, and the relationship information.

According to this aspect, since a meaning relationship is estimated based on feature points in a particular relationship, it becomes possible to estimate a meaning relationship more accurately.

In the above aspect, the plurality of image objects may include an image object of a person and an image object of a material body; and the information processing apparatus may further include an information generation section generating, if a meaning relationship between the image object of the person and the image object of the material body estimated by the meaning estimation section satisfies a particular meaning condition, and a state of the person estimated based on feature points of the image object of the person satisfies a particular state condition, information corresponding to the state.

According to this aspect, since information about an image object that satisfies a particular condition is generated, information desired by the user is easily generated.

In the above aspect, the state condition may include a condition about the person's posture estimated based on the feature points of the image object of the person; and the information generation section may generate information corresponding to the person's posture.

According to this aspect, it becomes possible for the user to, for a posture of a person included in an image, acquire appropriate information corresponding to the posture.

In the above aspect, the state condition may include a condition about a load imposed on the person that is estimated based on the feature points of the image object of the person and the supplementary information about the weight about the image object of the material body; and the information generation section may generate information corresponding to the load.

According to this aspect, if a load imposed on a person satisfies a predetermined condition, it becomes possible for the user to acquire appropriate information about the load.

In the above aspect, the image may include the plurality of image objects; the meaning estimation section may estimate a meaning relationship for each of the plurality of image objects; and the information processing apparatus may further include a feature point information generation section generating, for feature points of an image object corresponding to a meaning relationship matching a particular condition, information corresponding to the particular condition.

According to this aspect, even if many image objects are included in an image, it is possible to acquire information paying attention to an image object that satisfies a particular condition.

An information processing method according to another aspect of the present invention is an information processing method by an information processing apparatus, the information processing apparatus including a memory and a processor, and the method including: the memory storing relationship information in which a spatial relationship among feature points included in a plurality of target objects is associated with meaning information among the plurality of target objects; and the processor estimating, based on a spatial relationship among feature points extracted from a plurality of image objects included in an image and the relationship information, a meaning relationship among the plurality of image objects.

According to this aspect, a meaning relationship is estimated based on relationship information specified in advance. Since the user can set various relationship information he desires, it becomes possible to estimate more diverse relationships for a plurality of image objects. Further, for estimation of a relationship among a plurality of image objects, feature point of the image objects are used. Therefore, estimation of a more detailed relationship becomes possible.

A program according to another aspect of the present invention is a program for causing a computer to execute: storing relationship information in which a spatial relationship among feature points included in a plurality of target objects is associated with meaning information among the plurality of target objects; and estimating, based on a spatial relationship among feature points extracted from a plurality of image objects included in an image and the relationship information, a meaning relationship among the plurality of image objects.

According to this aspect, a meaning relationship is estimated based on relationship information specified in advance. Since the user can set various relationship information he desires, it becomes possible to estimate more diverse relationships for a plurality of image objects. Further, for estimation of a relationship among a plurality of image objects, feature point of the image objects are used. Therefore, estimation of a more detailed relationship becomes possible.

### Advantageous Effect of Invention

According to the present invention, it is possible to provide an information processing apparatus, an information processing method and a program that make it possible to estimate various relationships in more detail for a plurality of image objects included in an image.

### Brief Description of Drawings

[Figure 1] Figure 1 is a schematic configuration diagram of an information processing system according to a first embodiment.
[Figure 2] Figure 2 is a diagram showing an example of a relationship information list stored in a storage section according to the embodiment.
[Figure 3] Figure 3 is a functional block diagram showing an example of the configuration of a processing section according to the embodiment.
[Figure 4] Figure 4 is a diagram showing an image picked up by an image pickup section and a recognition result of a recognition section according to the embodiment.
[Figure 5] Figure 5 is a diagram showing an image object list in which information about image objects recognized by and feature points extracted based on the image by the recognition section according to the embodiment is listed up.
[Figure 6] Figure 6 is a diagram showing a supplementary information list indicating supplementary information about an image object of No. 2 shown in Figure 5.
[Figure 7] Figure 7 is a diagram showing a meaning relationship list in which results of a meaning estimation section having estimated meaning relationships are listed up.
[Figure 8] Figure 8 is a sequence diagram showing a flow of a process for an information processing apparatus according to the present embodiment to estimate a meaning relationship among a plurality of image objects included in an image.
[Figure 9] Figure 9 is a flowchart showing details of the meaning estimation process of Figure 8.
[Figure 10] Figure 10 is a flowchart showing a flow of a process from the information processing system according to the first embodiment generating information according to estimation of a meaning by a meaning estimation unit until displaying the generated information.
[Figure 11] Figure 11 is a functional block diagram of a processing section that an information processing apparatus according to a second embodiment has.
[Figure 12] Figure 12 is a diagram showing an image object list showing a result of a recognition section of a meaning estimation unit according to the embodiment having recognized image objects in an image according to the second embodiment.
[Figure 13] Figure 13 is a diagram showing a supplementary information list indicating supplementary information about an image object of No. 2 shown in Figure 12.
[Figure 14] Figure 14 is a diagram showing a meaning relationship list according to the second embodiment.
[Figure 15] Figure 15 is a flowchart showing a flow of a process by an information processing system according to the embodiment.
[Figure 16] Figure 16 is a diagram showing an example of the hardware configuration of each of an input/output apparatus and an information processing apparatus according to one embodiment of the present disclosure.

### Description of Embodiments

Preferred embodiments of the present invention will be described with reference to accompanying drawings. In the drawings, those with the same reference numeral have the same or similar configurations.

### [First embodiment]

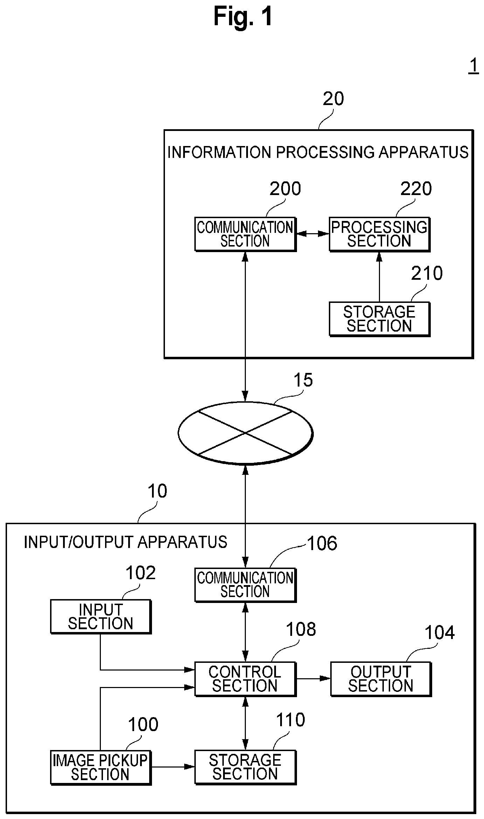

An information processing system 1 according to a first embodiment will be described with reference to Figure 1. The information processing system 1 according to the present embodiment is mainly provided with an input/output apparatus 10 and an information processing apparatus 20. The input/output apparatus 10 and the information processing apparatus 20 are mutually communicably connected via a communication network 15. In the present embodiment, it is assumed that the information processing apparatus 20 functions as a server on a cloud.

The communication network 15 can take various forms. The communication network 15 may be, for example, a data transmission network (WAN) or a local area network (LAN) for mutual connection through a dedicated line. In the present embodiment, description will be made on the assumption that the communication network 15 is the Internet which is a representative public network.

The input/output apparatus 10 can perform input, output and the like of information and can perform transmission/reception of various kinds of information to/from the information processing apparatus 20. Functions the input/output apparatus 10 has are realized by an image pickup section 100, an input section 102, an output section 104, a communication section 106, a control section 108 and a storage section 110 working in cooperation with one another.

The image pickup section 100 encompasses various types of image pickup devices such as an RGB camera, an infrared camera, a ToF (time-of-flight) camera and a laser range finder. The image pickup section 100 picks up an image such as a still image or a moving image. The image picked up by the image pickup section 100 may be a two-dimensional or three-dimensional image. In the present embodiment, it is assumed that the image to be picked up is a two-dimensional image.

In the present embodiment, the image pickup section 100 picks up an image of a golf course. For example, the image pickup section 100 picks up an image that includes one or more golf players and the like. The image pickup section 100 may cause the storage section 110 to store the picked-up image or transmit the picked-up image to the control section 108.

The input section 102 generates various kinds of input information in response to a user operation and transmits the generated input information to the control section 108.

The output section 104 can output various kinds of information. Specifically, the output section 104 is provided with a display section capable of displaying various kinds of information and a sound output section capable of outputting various kinds of sounds. For example, the display unit of the output section 104 can display an image picked up by the image pickup section 100, an arithmetic operation result by the information processing apparatus 20 and the like. Or alternatively, the sound output unit of the output section 104 can output a sound according to an arithmetic operation result and the like by the information processing apparatus 20.

The communication section 106 can send/receive various kinds of information to/from other apparatuses. For example, the communication section 106 can send/receive various kinds of information to/from the information processing apparatus 20 via the communication network 15. For example, the communication section 106 can send an image picked up by the image pickup section 100 to the information processing apparatus 20. The communication section 106 can receive various kinds of information processing results (for example, a meaning relation estimation result and information generated based on the estimation result) from the information processing apparatus 20. The communication section 106 transmits the received information to the control section 108.

The control section 108 controls various kinds of functions the input/output apparatus 10 has. Specifically, the control section 108 controls output of the output section 104, sending/receiving of the communication section 106 and the like. For example, the control section 108 can control display of a screen, output of a sound and the like by the output section 104. Further, the control section 108 can control various kinds of functions using various kinds of information stored in the storage section 110.

The storage section 110 stores various kinds of information. For example, the storage section 110 stores images picked up by the image pickup section 100, processing results of the information processing apparatus 20 and the like. The various kinds of information stored in the storage section 110 is used by the control section 108 as necessary.

The information processing apparatus 20 executes various kinds of information processing. In the present embodiment, the information processing apparatus 20 can receive an image from the input/output apparatus 10, estimate a meaning relationship among a plurality of image objects included in the image and send information corresponding to an estimation result to the input/output apparatus 10. Functions the information processing apparatus 20 has are realized by a communication section 200, a storage section 210 and a processing section 220 working in cooperation with one another.

The communication section 200 can send/receive various kinds of information to/from other apparatuses. For example, the communication section 200 can receive an image from the input/output apparatus 10 via the communication network 15. The communication section 200 can send a result of information processing by the information processing apparatus 20 to the input/output apparatus 10 via the communication network 15.

The storage section 210 stores various kinds of information. For example, the storage section 210 stores information (images and the like) used for information processing by the processing section 220, results of information processing by the processing section 220 and the like. The various kinds of information stored in the storage section 210 is referred to by the processing section 220 as necessary.

Further, the storage section 210 may store supplementary information accompanying various kinds of target objects. The target objects are objects that can be included in an image and are, for example, objects indicating persons, various kinds of material bodies or the like. The supplementary information may be referred to by the processing section 220 and used for various kinds of information processing.

For example, if a target object is an object of a particular person, the supplementary information may include information about the age, gender, physique, muscle strength, exercise capacity, wearing or carrying article, and the like of the particular person. For example, if a target object is an object of a material body, the supplementary information may include information about the weight, material, weight distribution, center of gravity and the like of the material body. Thus, the supplementary information can include information that cannot be accurately estimated only based on an image.

Further, the storage section 210 may store information for extracting feature points from image objects included in an image. Here, a feature point is information showing a characteristic part included in an image object. For example, the storage section 210 may store a leaned model constructed based on a predetermined machine learning algorithm, with an image on which information about each of feature points of image objects included in the image is annotated as learning data. The information about each feature point may include, for example, the kind of an image object that includes the feature point (for example, person or material body) or label information (person's hand, shoulder, leg or the like).

The storage section 210 may store various kinds of learned models. For example, a learned model may be a learned model that has been learned so as to estimate a person's posture based on extracted feature points.

Further, the storage section 210 stores relationship information in which a spatial relationship among feature points included in a plurality of target objects is associated with meaning information among the plurality of target objects. The spatial relationship may include, for example, a positional relationship, a distance relationship, a direction relationships, a density relationships and the like. Here, the density relationship is information defining the density of feature points in an image and may be, for example, information defining how many feature points exist in a predetermined range.

The meaning information among a plurality of target objects is information defining a meaning among the plurality of target objects. For example, the meaning information among a plurality of target objects may include at least any of an action against a material body by a person (for example, how to use the material body), the purpose of an action and an impact that a material body has on a person. For example, the meaning information can be information showing what a particular image object is doing against another image object (the purpose of an action).

Here, description will be made on an example in which the number of target objects is three. The three target objects will be referred to as a first object, a second object and a third object, respectively. It is assumed that the first object includes at least one first feature point, the second object includes at least one second feature point, and the third object includes at least one third feature point. In this case, the relationship information includes information in which a spatial relationship among these feature points (that is, the first, second and third feature points) is associated with meaning information among the three target objects (that is, the first, second and third objects). Though an example in which the number of target objects is three has been described here, the number of target object may be two, or four or more. In the description below, an example in which the number of target objects is two will be mainly described.

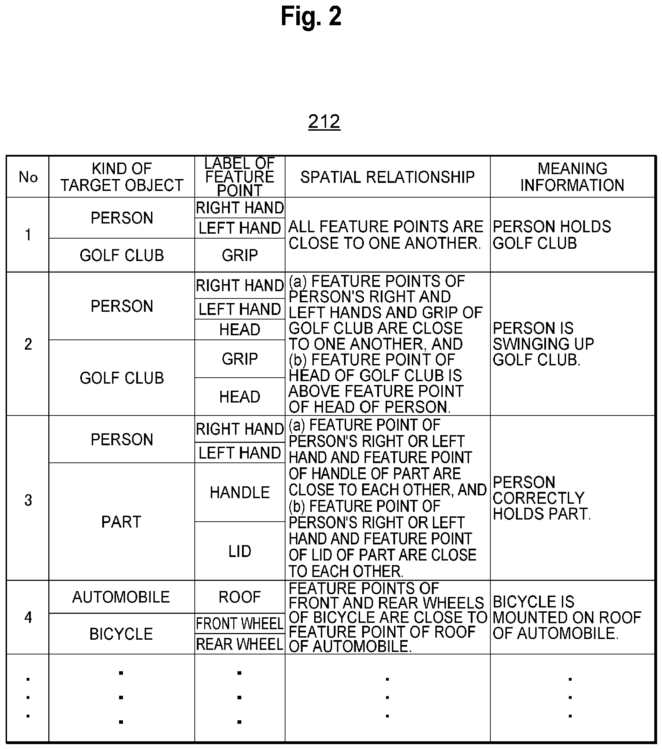

Specific examples of a spatial relationship among and meaning information about a plurality of target objects, and a relationship between those pieces of information will be described with reference to Figure 2. Figure 2 is a diagram showing an example of a relationship information list 212 stored in the storage section 210 according to the present embodiment. The relationship information list 212 shown in Figure 2 includes four relationship definitions from No. 1 to No. 4. Each of the relationship definitions includes kinds of target objects, labels of feature points of the target objects, a spatial relationship among the plurality of image objects and meaning information among the plurality of image objects. Further, each of the relationship definitions is relationship information that associates the spatial relationship and the meaning information. The relationship definitions from No. 1 to No. 4 will be referred to as first to fourth relationship definitions below.

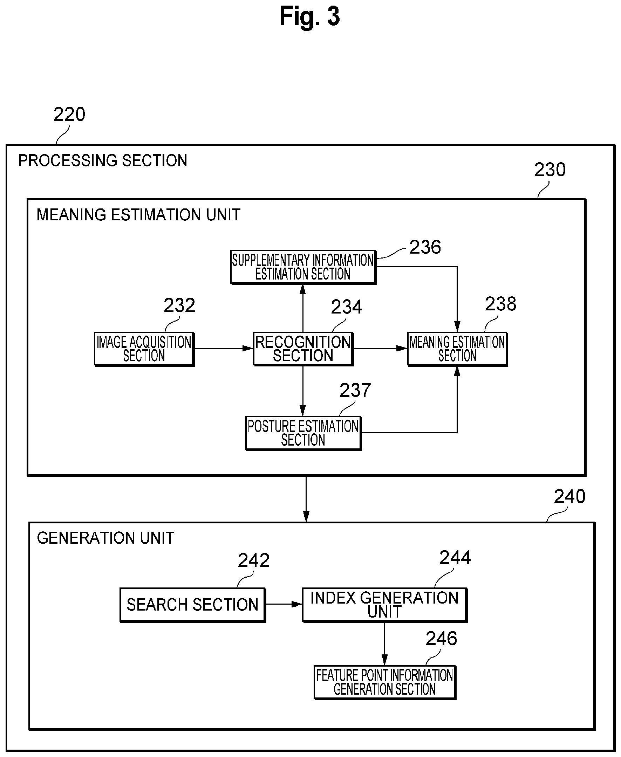

Each of the relationship definitions is used to estimate a meaning relationship among a plurality of image objects included in an image as described later. The meaning relationship among a plurality of target objects is information that gives a meaning to a relationship among the plurality of image objects. In the present embodiment, if a spatial relationship among a plurality of image objects included in an image satisfies a spatial relationship included in a relationship definition, a meaning relationship is estimated based on meaning information included in the relationship definition. Details of estimation of a meaning relationship will be described later with reference to Figure 3. Here, the content of the relationship information list 212 will be described.

For example, the first relationship definition is a relationship definition for a person target object and a golf club target object. Specifically, the first relationship definition associates a spatial relationship between feature points of a person's right and left hands and a feature point of the grip of a golf club with meaning information between the person target object and the golf club target object.

In a relationship definition according to the present embodiment, a spatial relationship between a feature point that is given a certain piece of label information and a feature point that is given another piece of label information in a particular relationship with the certain piece of label information is defined. In the spatial relationship of the first relationship definition, the feature point of the grip of the golf club and the feature points of the person's right and left hands related to the grip are defined. Specifically, the spatial relationship of the first relationship definition defines that all the feature points involved in the first relationship definition (that is, the feature points of the person's right and left hands and the feature point of the grip of the golf club) are close to one another. Here, that the three feature points are close to one another may be that distances among the three feature points are equal to or smaller than a predetermined value (for example, 10 cm). That is, the spatial relationship of the first relationship definition may be that distances among all the three feature points involved in the first relationship definition are equal to or shorter than 10 cm. The predetermined value is not limited to 10 cm or smaller, and an arbitrary distance may be set.

The meaning information of the first relationship definition is information that "the person holds the golf club". Therefore, the first relationship definition defines that it means that a person holds a golf club that feature points of all of the right and left hands and the grip are close to one another.

Further, each relationship definition may include a plurality of spatial relationships. For example, the second relationship definition includes two spatial relationships: (1) feature points of a person's right and left hands and the grip of a golf club are close to one another, and (2) a feature point of the head of the golf club is above a feature point of the person's head. If a spatial relationship among a plurality of image objects included in an image satisfies these two spatial relationships, a meaning relationship is estimated based on meaning information included in the second relationship definition, "the person is swinging up the golf club".

The third relationship definition is a relationship definition for a person target object and a part target object and includes two spatial relationships. Though the first to third relationship definitions are relationship definitions between a person target object and a material body target object, a relationship definition is not limited thereto and may be, for example, a relationship definition for a material body target object and a material body target object or a relationship definition for a person target object and a person target object.

The fourth relationship definition is a relationship definition for a material body target object and a material body target object. Specifically, the fourth relationship definition is a relationship definition for a target object of an automobile and a target object of a bicycle. Specifically, in the fourth relationship definition, a spatial relationship between a feature point of the roof of an automobile and feature points of the front and rear wheels of a bicycle is associated with meaning information between the automobile and the bicycle.

The spatial relationship of the fourth relationship is that the feature points of the front and rear wheels of the bicycle are close to the feature point of the roof of the automobile. The meaning information of the fourth relationship definition is that "the bicycle is mounted on the roof of the automobile".

Meaning information that can be included in the relationship information list 212 is not limited to the examples shown in Figure 2. Various kinds of meaning information can be defined being associated with spatial relationships. For example, the meaning information may be information such as that "the person has hit the ball with the golf club".

In addition, if the kinds of target objects are person and golf club, the meaning information may be information that "the person is going to approach". A spatial relationship to be associated with this meaning information may be, for example, that feature points of the person's left and right hands are close to feature points of the grip and shaft top of the golf club, and the golf club extends in the vertical direction (more specifically, the direction in which the shaft of the golf club extends is in parallel to a direction in which the person stands).

Or alternatively, the meaning information may be information that "the person is taking the golf club back". A spatial relationship to be associated with this meaning information may be that feature points of the person's left and right hands are close to feature points of the grip and shaft top end of the golf club, and a feature point of the head of the golf club is moving upward from downward, drawing an arc. Furthermore, if the meaning information is information that "the person is performing a downswing", a spatial relationship showing that feature points of the person's left and right hands are close to a feature point of the top end of a golf club, and a feature point of the head of the golf club is moving downward, drawing an arc may be associated with the meaning information.

Returning to Figure 1, the processing section 220 of the information processing apparatus 20 will be described. The processing section 220 executes various kinds of information processing. The processing section 220 can execute the various kinds of information processing using various kinds of information stored in the storage section 210 (for example, images, supplementary information, the relationship information list, various kinds of learned models and the like). Further, the processing section 220 can transmit a result of executed information processing (for example, a result of estimation of a meaning relationship or the like) to the communication section 200.

Figure 3 is a functional block diagram showing an example of the configuration of the processing section 220 according to the present embodiment. As shown in Figure 3, the processing section 220 is provided with a meaning estimation unit 230 and a generation unit 240.

The meaning estimation unit 230 can recognize image objects included in an image and estimate a meaning of a plurality of image objects included in the image. The processes that the meaning estimation unit 230 executes are realized by an image acquisition section 232, a recognition section 234, a supplementary information estimation section 236, a posture estimation section 237 and a meaning estimation section 238 working in cooperation with one another.

The image acquisition section 232 can acquire various kinds of images and transmit the acquired images to the recognition section 234. The image acquisition section 232 may acquire, for example, an image picked up by the image pickup section 100 or an image stored in the storage section 210 of the information processing apparatus 20. If the image pickup section 100 picks up a moving image, or a moving image is stored in the storage section 210, the image acquisition section 232 may acquire a still image at a particular timing that is included in the moving image. In the present embodiment, the image acquisition section 232 acquires a still image picked up by the image pickup section 100.

In the present embodiment, it is assumed that the image acquired by the image acquisition section 232 includes image objects of two or more persons and includes an image object of a person who holds a golf club.

The recognition section 234 can extract or recognize various kinds of information based on the image and transmit a result of the extraction or recognition to the supplementary information estimation section 236, the posture estimation section 237 and the meaning estimation section 238. For example, the recognition section 234 can extract feature points included in the image. Specifically, the recognition section 234 can extract the feature points from the image using a learned model constructed based on a predetermined machine learning algorithm, which is stored in the storage section 210.

Further, the recognition section 234 can give various kinds of information to each of the extracted feature points. For example, the recognition section 234 can give a number, position information, label information and the like. The position information is information that identifies a position of a feature point in the image, and it is expressed by two-dimensional coordinates in the present embodiment. If the image is a three-dimensional image, the position information may be expressed, for example, by three-dimensional coordinates. The label information is information that distinguishes a feature point from other feature points included in an image object. For example, when an image object is an image object of a person, the label information may be information showing the person's head, arm, shoulder, hips or the like.

In the present embodiment, the recognition section 234 can extract a plurality of feature points from an image and give label information to the extracted feature points. The recognition section 234 can recognize an image object based on a set of extracted feature points. Furthermore, the recognition section 234 can identify the kind of the recognized image object (for example, person, golf club or the like). For example, based on a set of a plurality of feature points (person's hands, head, shoulders, legs and the like), the recognition section 234 can recognize that an image object that includes the feature points is an image object of a person.

A method for the recognition section 234 to recognize feature points and an image object is not limited to the above method of, after extracting feature points, recognizing an image object based on a set of extracted feature points (a bottom-up method). For example, the method for the recognition section 234 to recognize feature points and an image object may be a method of, after recognizing an image object included in an image, extracting feature points included in the recognized image object (a top-down method).

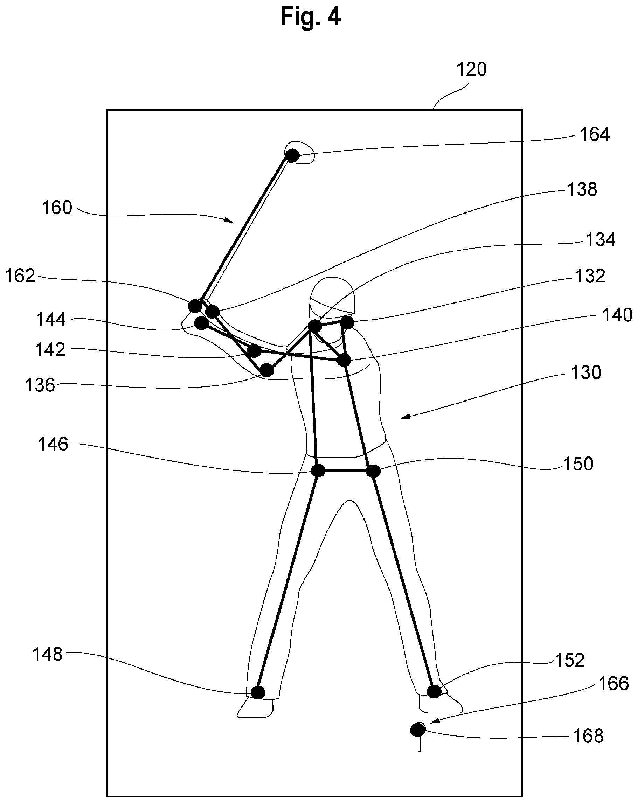

A recognition result of the recognition section 234 according to the present embodiment will be described with reference to Figure 4. Figure 4 is a diagram showing an image 120 picked up by the image pickup section 100 and a recognition result of the recognition section 234 according to the present embodiment. The image 120 includes an image object of a person (hereinafter also referred to as a "person object 130"), an image object of a golf club (hereinafter also referred to as a "club object 160") and an image object of a golf ball (hereinafter also referred to as a "ball object 166"). Though the image 120 includes image objects of a plurality of persons, they are omitted in Figure 4.

The recognition section 234 can extract feature points for each of the person object 130, the club object 160 and the ball object 166 and give label information to each of the extracted feature points. In Figure 4, the feature points extracted from each of the image objects are indicated by circles. Specifically, for the person object 130, a feature point 132 of the face, a feature point 134 of the right shoulder, a feature point 136 of the right elbow, a feature point 138 of the right hand, a feature point 140 of the left shoulder, a feature point 142 of the left elbow, a feature point 144 of the left hand, a feature point 146 of the right hip, a feature point 148 of (the tip) of the right leg, a feature point 150 of the left hip and a feature point 152 of (the tip) of the left leg are extracted. For the club object 160, a feature point 162 of the grip and a feature point 164 of the head are extracted. Furthermore, for the ball object 166, a feature point 168 of the center is extracted.

Feature points that satisfy a particular condition are connected with a straight line. Specifically, feature points with label information that satisfy a given condition are connected with a straight line. For example, the feature points 148 and 146 of the right leg and right hip of the person object 130 are connected with a straight line.

The recognition section 234 can identify the kind of an image object based on feature points extracted from the image object. For example, the recognition section 234 may identify the kind of an image object using a learned model learned so as to output the kind of an image object based on a spatial relationship among a plurality of feature points. For example, the recognition section 234 can identify that the kind of the person object 130 is person based on the feature points extracted from the person object 130. Further, the recognition section 234 can identify that the kind of the club object 160 is golf club based on the feature points extracted from the club object 160.

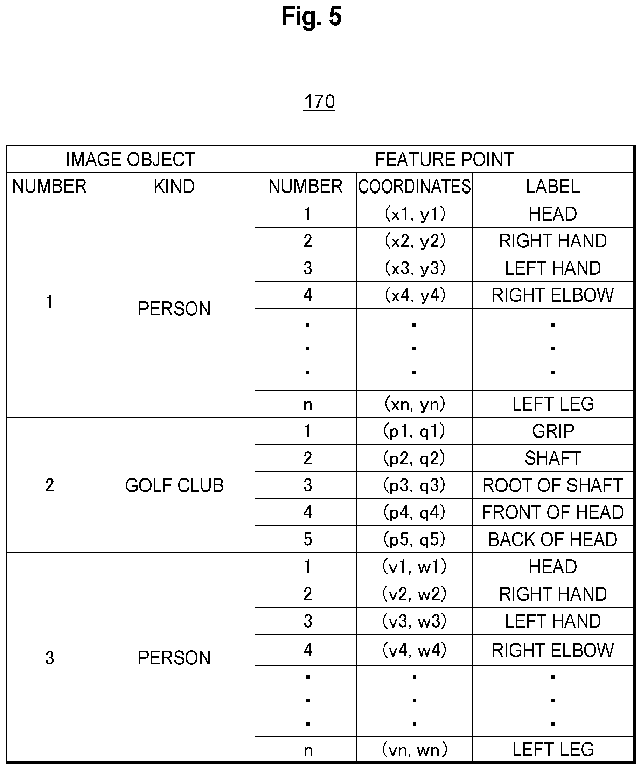

Figure 5 is a diagram showing an image object list 170 in which information about image objects recognized and feature points extracted based on the image 120 by the recognition section 234 according to the present embodiment (hereinafter referred to as "image object information") is listed up. The image object list 170 includes pieces of image object information attached with numbers. For example, the image object list 170 includes two pieces of person image object information and one piece of golf club image object information. It is assumed that the two person image objects are image objects of different persons.

It is assumed that the image object of No. 1 corresponds to the person object 130 shown in Figure 4, and the image object of No. 2 corresponds to the club object 160 shown in Figure 4. It is assumed that the image object of No. 3 is omitted in the image 120 shown in Figure 4. It is assumed that the feature points shown in Figure 5 include feature points omitted in the image 120 shown in Figure 4 (for example, a feature point of the shaft of the golf club).

Returning to Figure 3, the supplementary information estimation section 236 that the processing section 220 has will be described. The supplementary information estimation section 236 can estimate supplementary information accompanying an image object. For example, by referring to information stored in the storage section 210, the supplementary information estimation section 236 can estimate supplementary information about an image object using supplementary information about a target object corresponding to the image object. For example, it is assumed that supplementary information about a target object of a golf club is stored in the storage section 210. In this case, the supplementary information estimation section 236 can estimate supplementary information about the club object 160 using the supplementary information.

Further, the supplementary information estimation section 236 can estimate supplementary information about an image object based on feature points extracted from the image object. For example, the supplementary information estimation section 236 can estimate a person's position, physique, orientation and the like based on a positional relationship among a plurality of feature points extracted from an image object of the person. The supplementary information estimation section 236 can estimate the position, size, shape, orientation and the like of a material body based on a positional relationship among a plurality of feature points extracted from an image object of the material body.

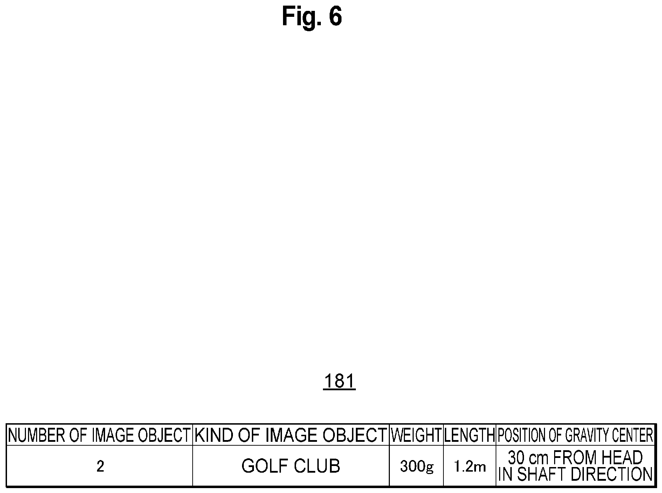

Figure 6 is a diagram showing a supplementary information list 181 indicating supplementary information about the image object of No. 2 shown in Figure 5. In the supplementary information list 181, the weight (300 g), length (1.2 m) and gravity center position (30 cm from the head in the shaft direction) of the golf club are included as the supplementary information. The supplementary information list 181 may include supplementary information estimated by the supplementary information estimation section 236. For example, the length of the golf club may be estimated supplementary information. The weight and gravity center position of the golf club may be supplementary information stored in the storage section 210 in advance. The supplementary information list 181 is referred to by the meaning estimation section 238 as necessary.

Returning to Figure 3, the posture estimation section 237 that the processing section 220 has will be described. The posture estimation section 237 can estimate a person's posture based on a plurality of feature points extracted from an image object of the person and transmit a result of the estimation to the meaning estimation section 238. For example, the posture estimation section 237 may estimate the person's posture using a leaned model constructed based on any of various kinds of machine learning algorithms.

Or alternatively, the posture estimation section 237 may estimate the person's posture based on a spatial relationship (for example, a positional relationship) among the plurality of feature points extracted from the image object of the person. For example, the posture estimation section 237 may estimate the person's posture based on a positional relationship among feature points of various kinds of joints. For example, the posture estimation section 237 can estimate various kinds of postures such as a sitting posture, a standing posture and a posture with legs apart. The posture estimation section 237 transmits an estimation result to the meaning estimation section 238.

Based on a spatial relationship among feature points extracted from a plurality of image objects included in an image and the relationship information, the meaning estimation section 238 estimates a meaning relationship among the plurality of image objects. Thereby, the meaning estimation section 238 extracts feature points of a plurality of image objects including persons and material bodies and estimates a meaning relationship based on rules. Therefore, even if there are a plurality of persons and a plurality of material bodies in an image, the meaning estimation section 238 can estimate, based on rules for a spatial relationship between feature points of an image object of a particular person among the plurality of persons and feature points of an image object of a particular material body among the plurality of material bodies, a meaning relationship between the image object of the particular person and the image object of the particular material body. In the present embodiment, the meaning estimation section 238 estimates a meaning relationship among a plurality of image objects using the relationship information included in the relationship definitions described with reference to Figure 2. Here, estimation of a meaning by the meaning estimation section 238 will be described, with attention being paid to an image object of a person and an image object of a golf club held by the person that are included in an image.

First, the meaning estimation section 238 identifies a spatial relationship between the feature points of the person object 130 and the feature points of the club object 160 recognized by the recognition section 234. Thereby, not only when a person is moving but also when a material body is moving, the meaning estimation section 238 can identify a spatial relationship between the person and the material body whose positions are changing, by extracting feature points included in each of an image object of the person and an image object of the material body in real time. Here, it is assumed that the spatial relationship among the feature points of the image objects satisfies the spatial relationship of the first relationship definition shown in Figure 2. That is, it is assumed that the feature points of the person's both hands (right and left hands) and the feature point of the grip of the golf club are close to one another.

In the present embodiment, based on a spatial relationship between a feature point extracted from a certain image object, which is given label information, and a feature point of an image object in a particular relationship with the feature point, which is given label information, the meaning estimation section 238 estimates a meaning relationship between the image objects. Here, it is assumed that the grip of the golf club and the person's both hands are in a particular relationship. Therefore, the meaning estimation section 238 can estimate a meaning relationship between the person object 130 and the club object 160 based on the feature points that are given the label information. Specifically, the meaning estimation section 238 can estimate that "the person holds the golf club" based on the first relationship definition.

A case is conceivable where, when a person holds a golf club, the person's hands cover the grip of the golf club, and a feature point of the grip of the golf club is not extracted from an image. In this case, the meaning estimation section 238 may estimate that "the person holds the golf club" without using the feature point of the grip. For example, it is assumed that a feature point of the head of a golf club exists within a predetermined range based on an extension line from a feature point of a person's elbow (right or left elbow) toward a feature point of the person's hand (right or left hand), and the shaft of the golf club extends from the feature point of the head toward the person (for example, the person's hands or the like). In this case, the meaning estimation section 238 can estimate the action that "the person holds the golf club" even if the feature point of the grip of the golf club is not extracted.

Or alternatively, the meaning estimation section 238 may estimate the meaning relationship using a feature point of an image object of a golf ball in addition to the feature points of the person object 130 and the club object 160. For example, the meaning estimation section 238 may estimate a meaning relationship that "the person is going to hit the golf ball with the golf club". Thus, the meaning estimation section 238 according to the present embodiment can estimate the purpose of a person's action with a material body.

Further, the meaning estimation section 238 can estimate a meaning relationship among a plurality of image objects based on supplementary information accompanying the image objects. The supplementary information the meaning estimation section 238 uses to estimate a meaning may be supplementary information stored in the storage section 210 in advance or supplementary information estimated by the supplementary information estimation section 236.

For example, it is assumed that an image object of a golf club is given supplementary information such as a weight of 300 g and a size of 1.2 m. The meaning estimation section 238 can estimate meaning information based on such meaning information that the supplementary information is included in the relationship definition. For example, the meaning estimation section 238 may estimate the meaning information as a meaning relationship or may estimate information obtained by adding various kinds of information (for example, the supplementary information) to the meaning information as the meaning relationship. For example, the meaning estimation section 238 can estimate that "the person holds the golf club with the weight of 300g and the length of 1.2 m" or the like. Thereby, the meaning estimation section 238 can estimate a more detailed meaning relationship. The meaning relationship estimated by the meaning estimation section 238 is transmitted to the generation unit 240.

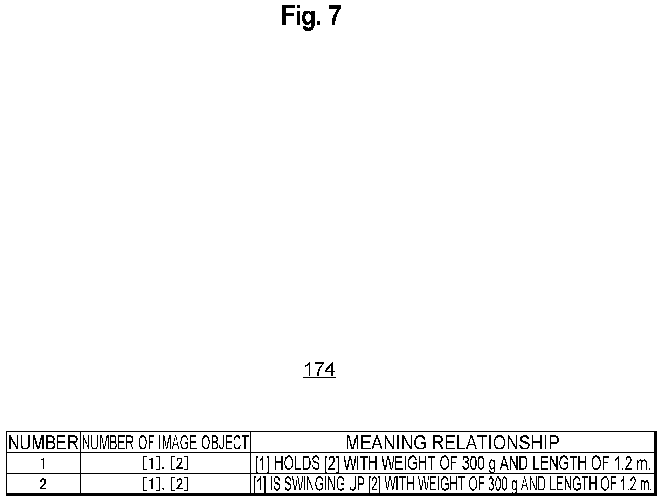

Figure 7 is a diagram showing a meaning relationship list 174 in which results of the meaning estimation section 238 having estimated meaning relationships are listed up. In the meaning relationship list 174, meaning relationships are expressed using image object numbers. It is assumed that the image object numbers shown in Figure 7 correspond to the numbers of the image objects shown in Figure 5. That is, [1] means the person, and [2] means the golf club.

For example, the meaning relationship of No. 1 shows that [1] has [2] with the weight of 300 g and the length of 1.2 m. The meaning relationship of No. 2 shows an action of [1] swinging up [2] with the weight of 300 g and the length of 1.2 m. Thus, even if combinations of kinds of image objects included in meaning relationships (a person and a golf club) are the same, the plurality of meaning relationships can be estimated if the spatial relationship among the feature points of the image objects satisfy spatial relationships of a plurality of relationship definitions.

Returning to Figure 3, functions of the generation unit 240 of the processing section 220 will be described. The generation unit 240 according to the present embodiment is configured being intended to be an application for diagnosing a swing of a golf player (hereinafter referred to simply as a "player"). Specifically, the generation unit 240 generates various kinds of information corresponding to a state of a player based on a result of processing by the meaning estimation unit 230. The functions the generation unit 240 has are realized by a search section 242, an index generation unit 244 and a feature point information generation section 246 working in cooperation with one another. Each of the functional sections of the generation unit 240 can acquire various kinds of information (for example, an estimated meaning relationship) from each of the functional sections of the meaning estimation unit 230 or acquire various kinds of information (for example, the relationship information list) from the storage section 210 as necessary.

The search section 242 can search for a meaning relationship that matches a particular condition from among meaning relationships estimated by the meaning estimation section 238 and transmit a search result (for example, the meaning relationship that matches the particular condition) to the index generation unit 244. In the present embodiment, it is assumed that the particular condition is that a meaning relationship includes information that "the person holds the golf club". The search section 242 refers to the meaning relationship list 174 shown in Figure 7 to search for a meaning relationship that includes the information that "the person holds the golf club" (that is, the meaning relationship of No. 1). Therefore, if the image 120 includes image objects of a plurality of persons, the search section 242 can search for only meaning information about a person having a golf club.

The index generation unit 244 can generate information corresponding to a particular condition, about feature points of image objects corresponding to a meaning relationship that matches the particular condition. In the present embodiment, the index generation unit 244 can identify a situation (a phase) of a player based on a feature point or a meaning relationship and generate information to be an index for diagnosing a swing according to the situation of the player.

At the time of diagnosing the swing of the player, points to be diagnosed differ according to situations. For example, in a situation of the player swinging up a golf club, the positions of the player's elbows and knees are important points. In a situation of the player holding the golf club (that is, at address), it is better that the right shoulder is lower than the left shoulder in the case of a right-handed swing, and a positional relationship between the right and left shoulders of the player is important. Therefore, the index generation unit 244 can provide more appropriate information for a user such as the player by generating an index according to the situation of the player.

Here, it is assumed that, between the person object 130 and the club object 160, the meaning relationship of the action that "the person is swinging up the golf club" has been estimated. In this case, the positions of the player's elbows and knees are important points. The index generation unit 244 can calculate and generate appropriate positions of the elbows and knees, for example, based on a result of recognition by the recognition section 234 for the player (for example, information about feature points of the elbows and the knees). The index generation unit 244 transmits the generated information to the feature point information generation section 246.

The feature point information generation section 246 can generate information corresponding to a particular condition, about feature points of an image object corresponding to a meaning relationship that matches the particular condition. In the present embodiment, according to a phase identified based on the estimated meaning relationship, the feature point information generation section 246 generates information about corresponding feature points of the image object of the person.

For example, the feature point information generation section 246 can generate information about important points corresponding to a situation (a phase) of the player, based on information (for example, an index) generated by the index generation unit 244. Specifically, for feature points such as feature points of the elbows, knees, shoulders and the like to be important points, the feature point information generation section 246 can calculate and generate, for example, coordinates for displaying additional lines indicating ideal positions. Furthermore, the feature point information generation section 246 can generate superimposition information for causing the additional lines to be superimposed on the display section based on the generated coordinates.

Or alternatively, the feature point information generation section 246 can generate, as feature point information, superimposition information for causing the display section to perform display in a display mode in which joints or feature points of the joints to be important points of the player are conspicuous (for example, with red marks).

The feature point information generation section 246 transmits the generated information to the communication section 200. The information transmitted to the communication section 200 is sent to the input/output apparatus 10 via the communication network 15 and transmitted to the input/output apparatus 10. The display section of the output section 104 displays various kinds of screens based on the information generated by the feature point information generation section 246.

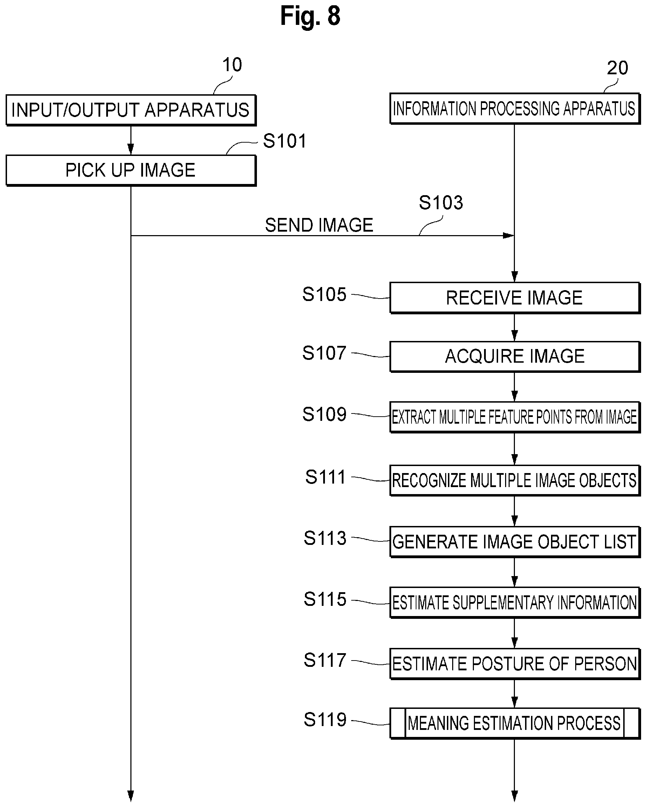

The functions of the information processing system 1 according to the present embodiment has been described above. Next, description will be made on a process for the information processing apparatus 20 according to the present embodiment to estimate a meaning relationship among a plurality of image objects included in an image with reference to Figure 8. The process of the information processing system 1 according to the present embodiment will be described along a sequence diagram shown in Figure 8.

First, the image pickup section 100 of the input/output apparatus 10 picks up an image (step S101). Next, the communication section 106 sends the image picked up by the image pickup section 100 to the information processing apparatus 20 (step S103). Next, the communication section 200 of the information processing apparatus 20 receives the image sent at step S103 (step S105).

Next, the image acquisition section 232 of the processing section 220 acquires the image received at step S105 (step S107). Next, the recognition section 234 extracts a plurality of feature points from the image (step S109). At this time, the recognition section 234 may give pieces of label information to the extracted feature points.

Next, the recognition section 234 recognizes image objects based on sets of the feature points extracted at step S109 (step Sill). Specifically, based on the plurality of sets, the recognition section 234 recognizes an image object corresponding to each of the sets. At this time, the recognition section 234 may identify the kind of the recognized image object. Next, the recognition section 234 generates an image object list based on a result of the recognition at step Sill (step S113) .

Next, the supplementary information estimation section 236 estimates supplementary information about each image object recognized by the recognition section 234 (step S115). Based on feature points of an image object of a person recognized by the recognition section 234, the posture estimation section 237 estimates the person's posture (step S117). If the recognition section 234 has not recognized an image object of a person, the posture estimation section 237 need not estimate a person's posture.

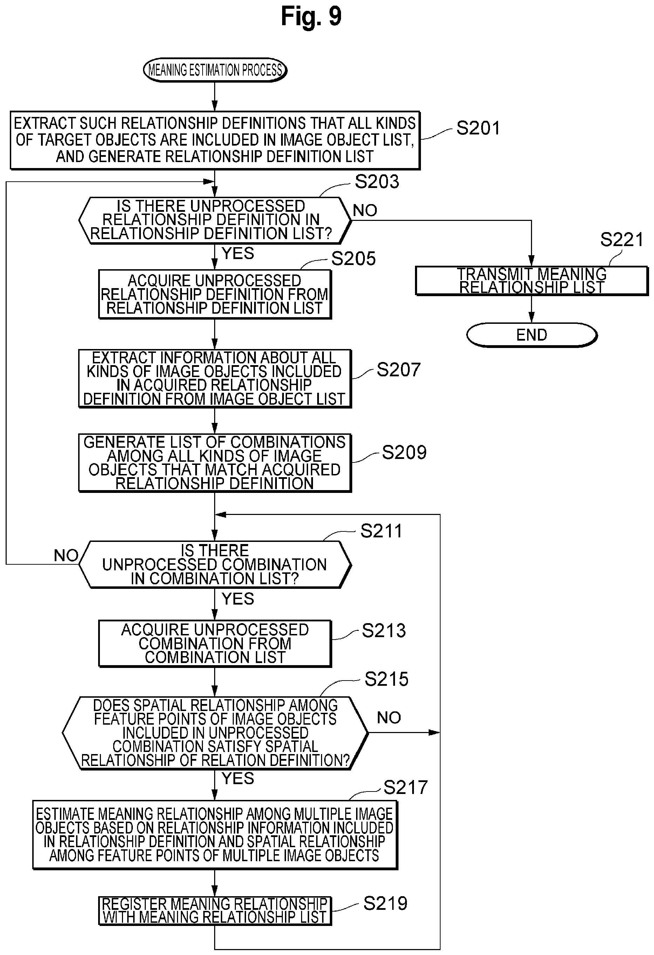

Next, the meaning estimation section 238 performs a meaning estimation process (step S119). Details of the meaning estimation process will be described later with reference to Figure 9. When the meaning estimation section 238 has performed the meaning estimation process, the process shown in Figure 8 ends.

Figure 9 is a flowchart showing the details of the meaning estimation process of Figure 8. First, the meaning estimation section 238 extracts such relationship definitions that all the kinds of target objects are included in the image object list, from a relationship information list, and generates a relationship definition list in which the extracted relationship definitions are listed up (step S201). For example, it is assumed that a result of recognition about an image object of a person and an image object of a golf club is included in the image object list. In this case, the meaning estimation section 238 generates the relation definition list by extracting such relationship definitions that a combination of kinds of target objects includes both of a person and a golf club, from the relationship information list. For example, the meaning estimation section 238 extracts the first and second relationship definitions each of which includes a person and a golf club as a combination of target objects from the relationship information list 212 shown in Figure 2 and generates the relationship definition list.

Next, the meaning estimation section 238 judges whether there is an unprocessed relationship definition in the relationship definition list or not (step S203). Here, the unprocessed relationship definition is a relationship definition for which neither the process of step S207 nor the process of S209 to be described later has not been performed. If it is judged that there is an unprocessed relationship definition in the relationship definition list (step S203: YES), the process proceeds to step S205. On the other hand, if it is judged that there is not an unprocessed relationship definition in the relationship definition list (step S203: NO), the process proceeds to step S221. Hereinafter, a process in the case where the judgment of YES is made at step S203 will be described, and then a process in the case where the judgment of NO is made at step S203 will be described.

If the judgment of YES is made at step S203, the meaning estimation section 238 acquires the unprocessed relationship definition from the relationship definition list (step S205). Next, the meaning estimation section 238 extracts information about image objects of all the kinds included in the relationship definition acquired at step S205 form the image object list (step S207). For example, if person and golf club image objects are included in the acquired relationship definition, the meaning estimation section 238 extracts information about person and golf club image objects from the image object list.

Next, the meaning estimation section 238 generates a list of combinations among all the kinds of image objects that match the relationship definition acquired at step S205 (step S209). For example, if a combination of a person and a golf club is defined in the relationship definition, the meaning estimation section 238 generates a list of combinations of a person image object and a golf club image object based on the information about the image objects extracted at step S207.

For example, it is assumed that information about two person image objects (hereinafter referred to as a "first person object" and a "second person object" in the description of the flowchart shown in Figure 9) and information about one golf club image object have been extracted at step S207. In this case, the meaning estimation section 238 can generate a combination list that includes two combinations, which is configured with a combination of the first person object and the golf club and a combination of the second person object and the golf club.

Next, the meaning estimation section 238 judges whether there is an unprocessed combination in the combination list or not (step S211). Here, the unprocessed combination is a combination for which the process of step S215 to be described later has not been performed. If it is judged that there is an unprocessed combination in the combination list (step S211: YES), the process proceeds to step S213. On the other hand, if it is judged that there is not an unprocessed combination in the combination list (step S211: NO), the process returns to step S203. If the judgment of YES is made at step S211, the meaning estimation section 238 acquires the unprocessed combination from the combination list (step S213) .

Next, the meaning estimation section 238 judges whether a spatial relationship among feature points of image objects included in the unprocessed combination acquired at step S213 satisfies a spatial relationship of the relation definition or not (step S215). If it is judged that the spatial relationship among the feature points of the image objects included in the unprocessed combination satisfies the spatial relationship of the relation definition (step S215: YES), the process proceeds to step S217. On the other hand, if it is judged that the spatial relationship among the feature points of the image objects included in the unprocessed combination does not satisfy the spatial relationship of the relation definition (step S215: NO), the process returns to step S211.

If making the judgment of YES at step S215, the meaning estimation section 238 estimates a meaning relationship among the plurality of image objects based on relationship information included in the relationship definition and the spatial relationship among the feature points of the plurality of image objects (step S217). At this time, the meaning estimation section 238 may estimate the meaning relationship further using supplementary information. Next, the meaning estimation section 238 registers the meaning relationship estimated at step S217 with a meaning relationship list (step S219). When the meaning estimation section 238 has registered the meaning relationship with the meaning relationship list, the process returns to step S211.

In this way, the meaning estimation section 238 judges, for all the relationship definitions included in the relationship definition list generated at step S201, whether the spatial relationship among the plurality of image objects included in the image matches or not. Furthermore, the meaning estimation section 238 registers a meaning relationship estimated for the plurality of image objects corresponding to the matched spatial relationship, with the meaning relationship list. When the meaning estimation section 238 has registered the estimated meaning relationship with the meaning relationship list after judging, for all the relationship definitions included in the relationship definition list, whether the spatial relationship among the plurality of image objects matches or not, a judgment of NO is made at step S203, and the process proceeds to step S221.

The meaning estimation section 238 transmits the meaning relationship list to other functional sections (step S221). For example, the meaning estimation section 238 outputs the meaning relationship list to the generation unit 240. When the meaning estimation section 238 has outputted the meaning relationship list to the other function sections, the meaning estimation process ends.

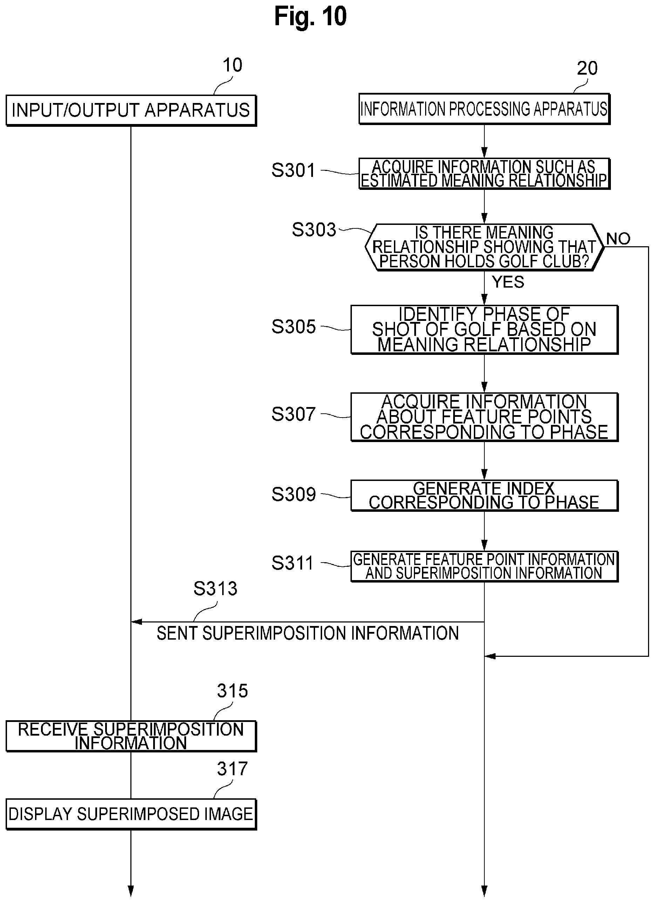

Description will made on a process from the information processing system 1 according to the first embodiment generating information according to estimation of a meaning by the meaning estimation unit 230 until displaying the generated information, with reference to Figure 10. It is assumed that, at the point of time when the process shown in Figure 10 is started, the various kinds of processes such as estimation of a meaning relationship among a plurality of image objects and estimation of the person's posture described with reference to Figures 8 and 9 have been executed.

First, the search section 242 that the generation unit 240 of the information processing apparatus 20 has acquires information such as the estimated meaning relationships from the meaning estimation unit 230 (step S301). At this time, the search section 242 may acquire the estimated meaning relationships as a meaning relationship list. Further, the search section 242 may acquire various kinds of information such as the estimated person's posture, in addition to the meaning relationships.

Next, the search section 242 judges whether the meaning relationship showing that "the person holds the golf club" exits or not (step S303). In the present embodiment, the search section 242 searches for the meaning relationship showing that "the person holds the golf club" based on the meaning relationship list acquired at step S301. If it is judged that the meaning relationship showing that "the person holds the golf club" does not exist (step S303: NO), the process shown in Figure 10 ends. On the other hand, if it is judged that the meaning relationship showing that "the person holds the golf club" exists (step S303: YES), the process proceeds to step S305.

Next, the index generation unit 244 identifies the phase of a shot of golf based on the meaning relationship searched out at step S303 (step S305). Specifically, the index generation unit 244 identifies the phase of the shot of golf based on a result of recognition of a plurality of image objects included in the searched-out meaning relationship. For example, the index generation unit 244 may identify the phase of the shot of golf based on a positional relationship among a plurality of feature points included in the image object of the person (for example, a positional relationship between feature points of the shoulder and hips). The identified phase may be, for example, address, takeback or any other phase.

Next, the index generation unit 244 acquires information about feature points corresponding to the phase identified at step S305 from an image object list (step S307). Specifically, the index generation unit 244 can acquire the information about the feature point corresponding to the identified phase (position information indicated by coordinates, label information or the like) from the image object list.

For example, if the identified phase is address, the index generation unit 244 may acquire information about feature points that are important for address such as feature points of elbows and knees included in the image object of the person. If the identified phase is takeback, the index generation unit 244 may acquire information about feature points that are important for takeback such as feature points of both shoulders and arms included in the image object of the person. If the identified phase is any other phase, the index generation unit 244 may acquire information about feature points that are important for the identified phase.

Next, the index generation unit 244 generates an index corresponding to the identified phase based on the information about the feature points acquired at step S307 (step S309). Specifically, the index generation unit 244 may calculate an ideal position of an important point corresponding to the phase.

For example, in the image 120 shown in Figure 4, the feature point 164 of the head of the golf club is held at a position higher than the feature point 132 of the person's head. Therefore, the meaning relationship of the action that "the person is swinging up the golf club" is estimated, and it is assumed that the phase is identified as backswing. For this phase, positions of the person's elbows and knees are important. Therefore, the index generation unit 244 may calculate ideal elbow and knee positions as indexes, based on feature points of the elbows and knees.

If the phase is address, it is desirable that the right shoulder is lower than the left shoulder in the case of a right-handed swing, and positions of the right and left shoulders are important. Therefore, the index generation unit 244 can generate ideal positions of the right and left shoulders as indexes.

Next, the feature point information generation section 246 generates feature point information and superimposition information (step S311). Next, the communication section 200 of the information processing apparatus 20 sends the superimposition information generated at step S311 to the input/output apparatus 10 (step S313). Next, the communication section 106 of the input/output apparatus 10 receives the superimposition information sent at step S313 (step S315). The received superimposition information is transmitted to the control section 108.

Next, based on the superimposition information received at step S315, the control section 108 causes the output section 104 to display the superimposition information on a screen (step S317). Thereby, for example, a screen on which the superimposition information is superimposed on the image picked up by the image pickup section 100 is displayed by the display section of the output section 104. For example, a screen showing particular joints red on the image object of the person is displayed on the display section. Thereby, the user can recognize an important point, a suitable form or the like for a swing in golf.

The information processing apparatus 20 according to the present embodiment estimates, based on a spatial relationship among feature points extracted from a plurality of image objects included in an image and relationship information, a meaning relationship among the plurality of image objects. The relationship information is information that the user can set to a desired relationship. Therefore, by the user appropriately setting relationship information, it becomes possible to estimate more diverse meaning relationships for a plurality of image objects. Further, since a meaning relationship is estimated based on feature points of image objects, it becomes possible to estimate the meaning relationship in more detail more accurately.

Especially, a particular scene, such as a golf swing on a golf course (or work in a factory), is assumed, an already-known prerequisite can exist for estimation of a meaning relationship between a person and a material body. If a person holds a golf club in the downward direction in front of a ball, for example, the already-known prerequisite can be a condition that the person is going to hit the ball with the golf club. If particular assembly is performed in a factory, the prerequisite is that the weight of a material body or a position of the material body at which a person should hold the material body is known, and a range within which the person moves is decided, or the like. In the information processing system 1 according to the present embodiment, since such a prerequisite can be used, for example, as relationship information, more robust and practical meaning relationship estimation becomes possible.

In the present embodiment, a plurality of person image objects are included in an image. In such an application that performs analysis or scoring of a player's form based on an image, analysis and the like have been conventionally performed on the assumption that one player is included in the image or that a player is standing at a particular location. In an image in which a player is playing golf on an actual golf course, however, caddies, other players, spectators and the like exist, and it is difficult to automatically identify the swinging player. Therefore, a place where the player's form and the like can be recorded or diagnosed is limited.

By using an estimated meaning relationship, it becomes possible for the information processing apparatus 20 according to the present embodiment to, when there are a plurality of persons and a plurality of material bodies in an image, identify a person and a material body involved in a meaning relationship to pay attention to (for example, a meaning relationship showing that the person is performing a particular action against a material body). Therefore, if an image includes image objects of many persons, the information processing apparatus 20 according to the present embodiment can automatically identify a person who holds a golf club and generate, for example, information required to record or analyze a swing without location restrictions.

By using a spatial relationship and a meaning relationship, the information processing apparatus 20 according to the present embodiment can estimate, even if a person or a material body is hidden behind another material body or the like, that the person or the material body exists behind the other material body or the like so that the spatial relationship between the person and the object is not contradictory. Therefore, the information processing apparatus 20 according to the present embodiment is robust against occlusion. That is, even if an image object is hidden behind another image object, the information processing apparatus 20 can appropriately recognize the image object hidden behind.

In the present embodiment, a meaning relationship is estimated based on supplementary information about image objects. Therefore, it becomes possible to estimate a more appropriate meaning relationship.

A meaning relationship among a plurality of image objects includes at least any of an action against a material body by a person, the purpose of the action and an impact that the material body has on the person. The action against a material body by a person may be, for example, the person holding the material body or the person throwing the material body. The purpose of an action may be, for example, a person causing a material body to move. The impact that a material body has on a person may be, for example, the material body giving a load to the person, the size of the load or the like.

### [Second embodiment]

In a second embodiment, description will be made mainly on points in which the second embodiment is different from the first embodiment, with content that is substantially the same as the first embodiment being appropriately omitted. In the second embodiment, the various kinds of components described in the first embodiment are applicable.

In the first embodiment, description has been made on the assumption that an image includes an image object of a golf club and an image object of a person who is swinging up the golf club. In comparison, an image according to the second embodiment is an image picked up in a factory where a particular product is manufactured, and description will be made on the assumption that the image includes an image object of a material body (a part of the product) and an image object of a person (a worker) who is carrying the part.

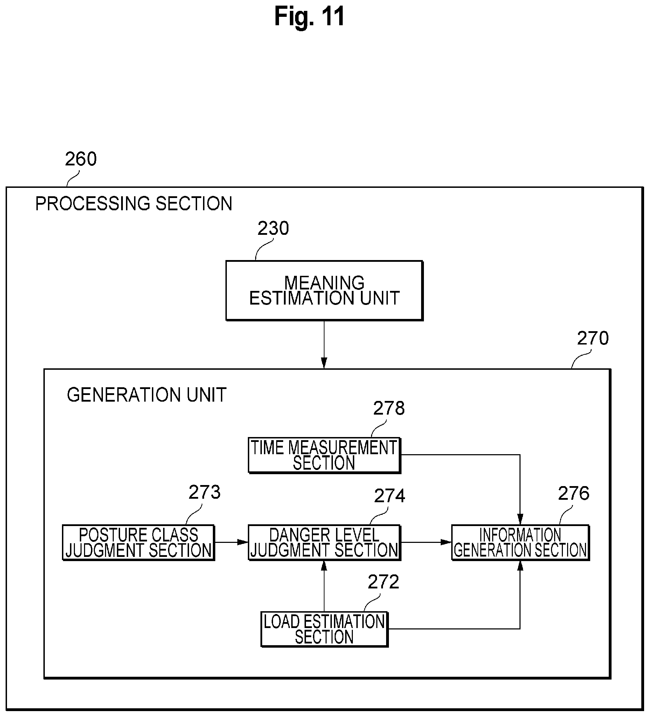

Figure 11 is a functional block diagram of a processing section 260 that an information processing apparatus according to the second embodiment has. In the second embodiment, the information processing apparatus is provided with the processing section 260 shown in Figure 11 instead of the processing section 220 shown in Figures 1 and 3. That is, the processing section 260 according to the second embodiment is provided with the meaning estimation unit 230 and a generation unit 270. Functions that the meaning estimation unit 230 according to the second embodiment has are substantially the same as the functions that the meaning estimation unit 230 described with reference to Figure 3 has. Therefore, detailed description of the functions of the meaning estimation unit 230 will be omitted. Here, description will be made on an example of a result recognized or estimated by the meaning estimation unit 230 in the present embodiment.

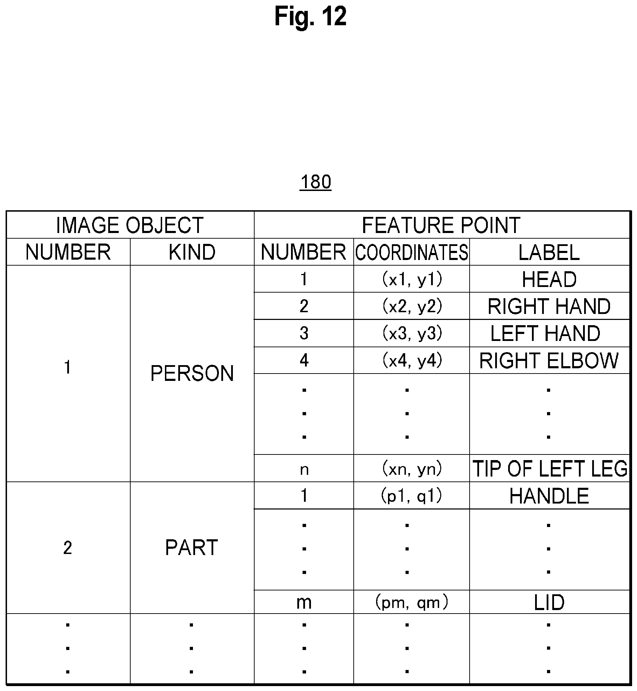

Figure 12 is a diagram showing an image object list 180 showing a result of the recognition section 234 of the meaning estimation unit 230 having recognized the image objects in the image according to the second embodiment. In the second embodiment, the recognition section 234 recognizes the image object of the person (the worker) and the image object of the part that are included in the image. The recognition section 234 extracts a plurality of feature points from each of the image objects and identifies a position of each of the extracted feature points by coordinates.

Further, the recognition section 234 can give label information to each of the extracted feature points. For example, the feature points of the image object of the person are given pieces of label information such as head, right hand, left hand, right elbow and the like. The recognition section 234 gives pieces of label information such as handle and lid to the feature points of the image object of the part. The kinds of label information given to feature points by the recognition section 234 are not limited to the above pieces of information.

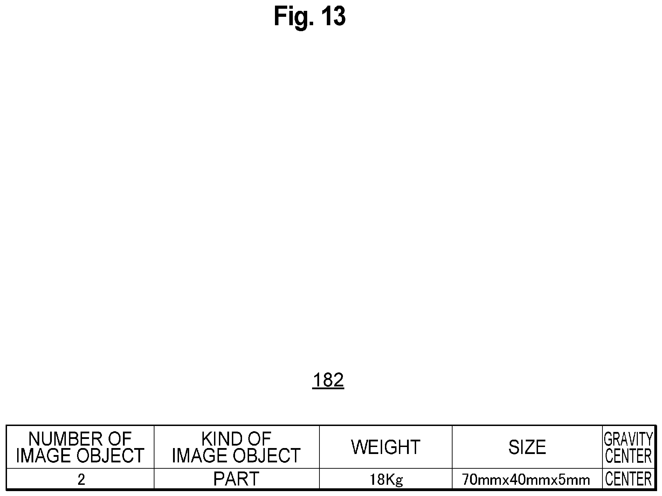

Figure 13 is a diagram showing a supplementary information list 182 indicating supplementary information about the image object of No. 2 shown in Figure 12. The supplementary information about the image object includes the kind of the image object, and the weight, size and gravity center of the material body shown by the image object. The supplementary information may be stored in the storage section 210 in advance or may be estimated based on feature points included in the image object. For example, information about the size (70 mm×40 mm×5 mm) can be estimated based on a plurality of feature points of the image object.

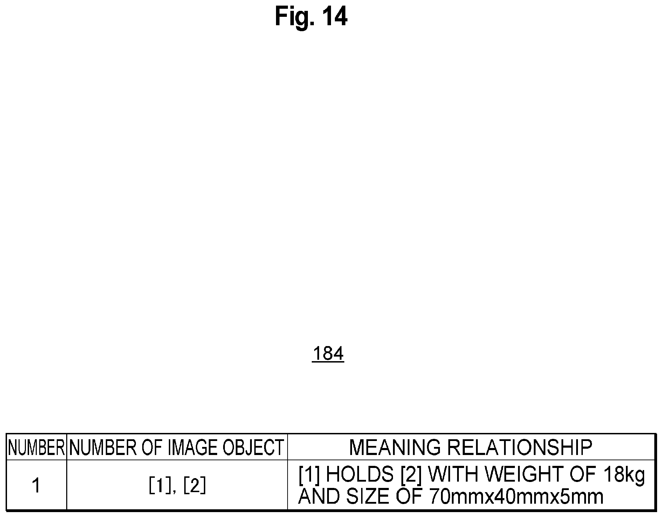

Figure 14 is a diagram showing a meaning relationship list 184 according to the second embodiment. A meaning relationship that "[1] holds [2] with a weight of 18 kg and a size of 70 mm×40 mm×5 mm" is registered with the meaning relationship list 184. Here, [X] indicates the number of each image object of the object recognition list shown in Figure 12. Therefore, [1] means the person, and [2] means the part.

The estimated meaning relationship may include other supplementary information. For example, information such as the material of the part (for example, metal) and the like may be included. For estimation of the meaning relationship, a posture estimation result by the posture estimation section 237 may be used. For example, estimation of a meaning relationship about a situation, such as that "the worker holds the heavy part with his legs apart" or that "the worker holds the heavy material body in a half-sitting posture" may be performed.

The generation unit 270 generates various kinds of information according to an estimation result by the meaning estimation unit 230. Functions that the generation unit 270 has are realized by a load estimation section 272, a posture class judgment section 273, a danger level judgment section 274, an information generation section 276 and a time measurement section 278 working in cooperation with one another.

If an image object of a person is included in an image, the load estimation section 272 can estimate a load imposed on the person. Specifically, the load estimation section 272 can estimate the load imposed on the person based on information about image objects involved in an estimated meaning relationship, supplementary information and posture information.

For example, the load estimation section 272 can acquire the weight and gravity center of a material body based on information and supplementary information about an image object of the material body. The load estimation section 272 can estimate the load imposed on the person based on the acquired weight and gravity center of the material body, the object information and supplementary information about the image object of the person and the like. Here, the load estimation section 272 can estimate the load using any of various kinds of publicly known technologies.

If an image object of a person is included in an image, the posture class judgment section 273 can estimate the class of the person's posture. In the present embodiment, the posture class judgment section 273 can judge the class of the posture based on a plurality of feature points extracted from the image object of the person. For example, the posture class judgment section 273 may judge the class of the posture according to the angle at which the back is bent. More specifically, the posture class judgment section 273 may judge that the class being a more dangerous class as the angle at which the back is bent is larger.

The danger level judgment section 274 can judge a danger level of a person's posture based on feature points extracted from an image object of the person. In the present embodiment, the danger level judgment section 274 can judge a danger level based on information about a posture. For example, the danger level judgment section 274 may judge the danger level based on a posture class judged by the posture class judgment section 273. For example, if a posture class is a more dangerous class, the danger level judgment section 274 may judge that the danger level is high.

Further, the danger level judgment section 274 may judge the danger level based on information about a material body (a part or the like) that a person holds (for example, a weight or the like), a load or the like imposed on the person by the material body. In the present embodiment, it is assumed that danger levels are expressed by five stages of 1 to 5 using categories called the AC (action category) levels. It is assumed that, the higher the value of the danger level is, the higher the degree of danger is. The danger level judgment section 274 may judge the danger level using any of various kinds of publicly known ergonomic warning references.

The information generation section 276 can generate various kinds of information according to a result estimated or judged by the meaning estimation unit 230 or the generation unit 270. The information generated by the information generation section 276 is transmitted to the communication section 200 and sent to the input/output apparatus 10 via the communication network 15.

For example, if a meaning relationship between an image object of a person and an image object of a material body estimated by the meaning estimation section 238 satisfies a particular meaning condition, and a state of the person estimated based on feature points of the image object of the person satisfies a particular state condition, then the information generation section 276 may generate information corresponding to the state.

In the present embodiment, it is assumed that the particular meaning condition is a condition that an estimated meaning relationship includes that "the person holds the material body". In the present embodiment, since the estimated meaning relationship includes that "the worker holds the part" as described above, the particular meaning condition is satisfied.

The particular state condition may be a condition about a person's posture estimated based on feature points extracted from an image object of the person. For example, the particular state condition may be a condition about a person's posture estimated based on feature points of an image object of the person. For example, the particular state condition may be that a posture class judged by the posture class judgment section 273 is a particular class. At this time, the information generation section 276 can generate information according to the person's posture. Specifically, if a posture class is a danger class, the information generation section 276 can generate information to show a warning (for example, a warning image or a warning sound) to the user.

Further, the particular state condition may be a condition about a load imposed on a person that is estimated based on feature points of an image object of the person and supplementary information about the weight for an image object of a material body. For example, the particular state condition may be a condition about the size of a load estimated by the load estimation section 272. At this time, the information generation section 276 can generate information corresponding to the load. For example, if the size of the load exceeds a predetermined value, the information generation section 276 can generate information to show a warning to the user.

In the present embodiment, description will be made on the assumption that the particular state condition is that a danger level judged by the danger level judgment section 274 is a predetermined level. In this case, if the judged danger level exceeds a predetermined danger level, the information generation section 276 generates information corresponding to the danger level. More specifically, the information generation section 276 can generate information about a display screen to show that a posture is dangerous, information for making a warning by a sound, or the like. Based on the information generated by the information generation section 276, the input/output apparatus 10 displays a warning or outputs a warning sound.

Further, the particular state condition may be a condition according to a load imposed on a person. For example, the particular state condition may be that a load imposed on a person exceeds a predetermined value. Or alternatively, the particular state condition may be that an accumulated value of loads on a person exceeds a predetermined value.

If the particular condition about a load is satisfied, the information generation section 276 may generate screen information for warning that a load is imposed, information for making a warning by a sound, or the like. Or alternatively, the information generation section 276 may generate superimposition information for displaying a part on which the load is imposed red or superimposition information for causing supplementary information (for example, the weight) about a material body a person holds to be superimposed on the screen. On the display section, the superimposition information generated by the information generation section 276 is superimposed on the image picked up by the image pickup section 100.

The time measurement section 278 can measure time. Specifically, the time measurement section 278 can measure time by resetting an integration timer or adding time to the integration timer. For example, the time measurement section 278 can measure time during which a predetermined danger level has lasted.

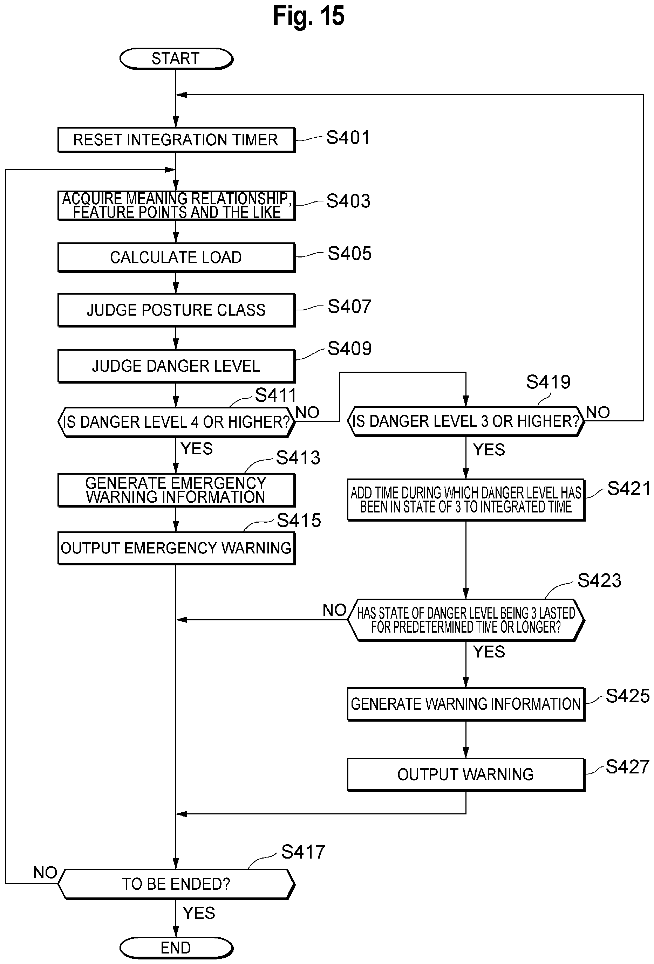

Figure 15 is a flowchart showing a flow of a process by an information processing system according to the second embodiment. The process by a computer system according to the second embodiment will be described below along the flowchart shown in Figure 15. It is assumed that, while the process shown in Figure 15 is being executed, image pickup by the image pickup section 100 is performed, and execution of recognition of image objects included in the image and estimation of a meaning relationship is continued by the meaning estimation unit 230.

First, the time measurement section 278 resets the integration timer to zero (step S401).

Next, the load estimation section 272, the posture class judgment section 273 and the danger level judgment section 274 acquire information about a meaning relationship, feature points and the like from the meaning estimation unit 230 (step S403). Here, the load estimation section 272, the posture class judgment section 273 and the danger level judgment section 274 acquire a meaning relationship including meaning information that "the person holds the material body", a result of recognition of image objects related to the meaning relationship or supplementary information, and the like.

Next, the load estimation section 272 estimates a load based on the information acquired at step S403 (step S405). Specifically, the load estimation section 272 may estimate the load imposed on the person according to a posture estimated by the posture estimation section 237 and supplementary information (for example, weight) about the material body that the person holds. Next, the posture class judgment section 273 judges a class of the posture based on a plurality of feature points extracted from the image object of the person (step S407).

Next, the danger level judgment section 274 judges a danger level (step S409). At this time, the danger level judgment section 274 may judge the danger level based on the load calculated at step S405 and the posture class judged at step S407.

Next, the danger level judgment section 274 judges whether or not the judged danger level is four or higher (step S411). If it is judged that the danger level is lower than 4 (step S411: NO), the process proceeds to step S419. On the other hand, if it is judged that the danger level is 4 or higher (step S411: YES), the process proceeds to step S413. Hereinafter, a process in the case where the judgment of YES is made at step S411 will be described, and then a process in the case where the judgment of NO is made at step S411 will be described.

If the judgment of YES is made at step S411, the information generation section 276 generates emergency warning information (step S413). The emergency warning information is information for causing the output section to display an emergency warning screen or output an emergency warning by a sound for a certain period of time. The generated emergency warning information is transmitted to the communication section 200 and sent to the input/output apparatus 10 via the communication network 15.

Next, the output section 104 of the input/output apparatus 10 outputs an emergency warning (step S415). Specifically, the output section 104 may display the emergency warning or output the emergency warning by a sound based on the emergency warning information generated at step S413. Thereby, the worker can notice the emergency warning and, for example, correct his posture.

When the emergency warning is outputted, the processing section 260 of the information processing apparatus 20 judges whether or not to end the process (step S417). Specifically, the processing section 260 judges whether or not to end the various processes by the meaning estimation unit 230 and the generation unit 270. For example, if image pickup by the image pickup section 100 has ended, the processing section 260 may judge that the process is to be ended. If it is judged that the process is to be ended (step S417: YES), the process shown in Figure 15 ends. On the other hand, if it is judged that the process is not to be ended (step S417: NO), the process returns to step S403.

If the judgment of NO is made at step S411, the danger level judgment section 274 judges whether or not the danger level is 3 or higher (step S419). If it is judged that the danger level is lower than 3 (step S419: NO), the process returns to step S401. On the other hand, if it is judged that the danger level is 3 or higher (step S419: YES), the process proceeds to step S421.

Next, the time measurement section 278 adds time during which the danger level has been in the state of 3 to the integrated time (step S421). For example, the time measurement section 278 may add time from the danger level having been judged to be 3 last until the danger level being judged to be 3 this time to the integration time.

Next, the time measurement section 278 judges whether or not the state of the danger level being 3 has lasted for a predetermined time or longer, based on the integration timer (step S423). If it is judged that the state of the danger level being 3 has not lasted for the predetermined time or longer (step S423: NO), the process proceeds to step S417. On the other hand, if it is judged that the state of the danger level being 3 has lasted for the predetermined time or longer (step S423: YES), the process proceeds to step S425.

If the judgment of YES is made at step S423, the information generation section 276 generates warning information (step S425). The warning information may be information for causing the output section to display a warning or output the warning by a sound. The generated warning information is sent to the input/output apparatus 10 via the communication network 15.

Next, the output section 104 of the input/output apparatus 10 outputs a warning based on the warning information generated at step S425 (step S427). Specifically, the output section 104 displays the warning or outputs the warning by a sound. Thereby, the user can correct his posture.

According to the present embodiment, if a meaning relationship between an image object of a person and an image object of a material body estimated by the meaning estimation section 238 satisfies a particular meaning condition, and a state of the person estimated based on feature points of the image object of the person satisfies a particular state condition, then information corresponding to the state is generated. Therefore, it becomes possible to generate a state of a person involved in a meaning relationship that satisfies a particular condition. Thereby, for example, it becomes possible to appropriately notify the user of the state of the person.

In the conventional technology, a person's posture is judged by manually inputting a posture judgment result to an apparatus or attaching a special apparatus to the person's body. In the information processing system 1 according to the present embodiment, a main part of a process for judging a person's posture is automated. Furthermore, in the information processing system 1, since the posture can be judged using an image picked up by the image pickup section 100, the posture can be judged without touching the person.

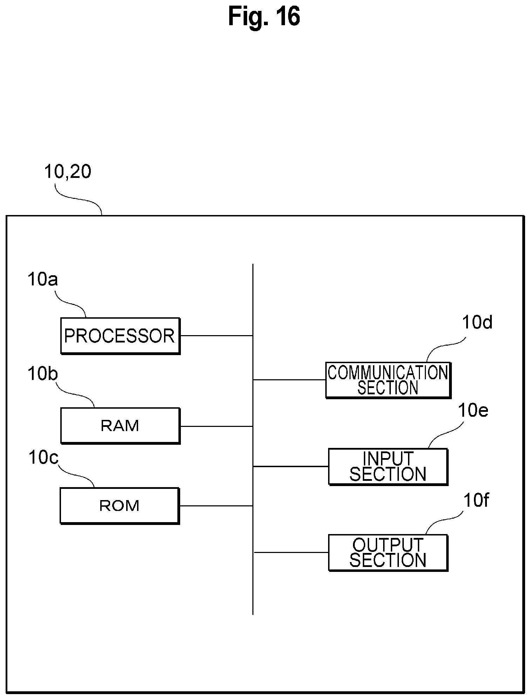

Figure 16 is a diagram showing an example of the hardware configuration of each of the input/output apparatus 10 and the information processing apparatus 20 according to one embodiment of the present disclosure. Each of the input/output apparatus 10 and the information processing apparatus 20 has a processor 10a having a CPU (central processing unit) or a GPU (graphics processing unit), which corresponds to an arithmetic section, a RAM (random access memory) 10b corresponding to the storage sections 110 and 210, a ROM (read-only memory) 10c corresponding to the storage sections 110 and 210, a communication section 10d, an input section 10e and an output section 10f. These components are mutually connected, being capable of sending/receiving data via a bus. Though description will be made on a case where each of the input/output apparatus 10 and the information processing apparatus 20 is configured with one computer in this example, each of the input/output apparatus 10 and the information processing apparatus 20 may be realized by combining a plurality of computers. The components shown in Figure 16 are mere examples, and each of the input/output apparatus 10 and the information processing apparatus 20 may have components other than these components or may not have a part of these components. Here, the arithmetic section includes the control section 108 or the processing section 220.

The CPU 10a is a control section that performs control for execution of a program stored in the RAM 10b or the ROM 10c, and arithmetic operation and processing of data. The CPU 10a is an arithmetic section that executes a program for recognizing image objects included in an image and estimating a meaning relationship among a plurality of image objects (an estimation program). The CPU 10a receives various data from the input section 10e and the communication section 10d, and displays an arithmetic operation result of the data on the output section 10f or stores the arithmetic operation result into the RAM 10b.

The RAM 10b is a part of a storage section where data can be rewritten and may be configured, for example, with a semiconductor memory element. The RAM 10b may store programs to be executed by the processor 10a and data such as images and estimation results. The above are mere exemplifications, and the RAM 10b may store data other than the above and may not store a part of the above.

The ROM 10c is a part of the storage section from which data can be read and may be configured, for example, with a semiconductor memory element. The ROM 10c may store, for example, the estimation program and data that is not rewritten.

The communication section 10d is an interface for connecting the input/output apparatus 10 and the information processing apparatus 20 to other equipment. The communication section 10d may be connected to a communication network such as the Internet.

The input section 10e accepts input of data from the user and may include, for example, various kinds of buttons, a mouse, a keyboard and a touch panel.

The output section 10f functions as a display section or a sound output section. The output section 10f may be provided, for example, with any of various kinds of display devices such as an LCD (liquid crystal display) to display various kinds of information. The output section 10f may display, for example, an image, superimposition information and the like. Further, the output section 10f is provided, for example, with any of various kinds of sound output devices such as a speaker to output various kinds of information by a sound. The output section 10f may output, for example, a warning by a sound.

The estimation program may be provided by being stored in a computer-readable storage medium such as the RAM 10b and the ROM 10c or may be provided via a communication network connected to by the communication section 10d. In each of the input/output apparatus 10 and the information processing apparatus 20, the various operations described using Figure 1 and the like are realized by the CPU 10a executing the estimation program. The physical components are mere exemplifications, and the input/output apparatus 10 and the information processing apparatus 20 are not necessarily required to be dependently configured. For example, each of the input/output apparatus 10 and the information processing apparatus 20 may be provided with an LSI (large-scale integration) in which the CPU 10a, the RAM 10b and the ROM 10c are integrated.

The embodiments described above are intended to facilitate understanding of the present invention and are not intended to limit the present invention to interpret the present invention. Each element that the embodiments are provided with, and the arrangement, material, conditions, shape, size and the like thereof are not limited to those that have been exemplified and can be appropriately changed. Further, it is possible to partially replace or combine components between the different embodiments.

Processes of the steps described with reference to Figures 8 to 10 and 15 may be chronologically executed along the order described in the present specification or may be executed in order different from the order described above as far as contradiction does not occur. Further, the processes of the steps may be implemented in series as described in the present specification, or processes of a plurality of steps may be executed in parallel.

In the embodiments described above, description has been made on the assumption that the meaning estimation unit 230 of the information processing apparatus 20 performs estimation of a meaning and transmits a result of the estimation of the meaning to a subsequent functional section (for example, the generation unit 240, 270 or the like). Without being limited thereto, the subsequent functional section of the meaning estimation unit 230 may be provided with a meaning estimation section. Or alternatively, the meaning estimation unit 230 may partially estimate a meaning relationship, and the subsequent functional section may additionally estimate a meaning relationship specific to the application.

In the above embodiments, description has been made on the assumption that the information processing apparatus 20 executes the processes for estimation of a meaning relationship and the like based on one image. Without being limited thereto, and the information processing apparatus 20 may execute the various kinds of processes using a relationship among a plurality of images. For example, the meaning estimation section 238 may estimate a meaning relationship based on a relationship among positions of a particular image object included in a plurality of images that are chronologically arranged.

For example, it is assumed that there is an image that includes an object image in which a person raises his right hand with a ball. It is difficult to determine whether the person is going to throw the ball or catch the ball only by this image. However, by looking at a relationship between a past image and the current image, it is possible to distinguish whether the ball is approaching or receding. Therefore, by looking at the relationship between the past image and the current image, it becomes possible to distinguish whether the person is going to throw the ball or catch the ball.

It is assumed that an image includes an image object of a worker who holds a material body in his hands. In this case, the meaning estimation section 238 can estimate a meaning relationship based on a positional relationship among particular feature points of the image object (for example, feature points of the person's hands or a feature point of a particular part of the material body) included in a plurality of images that are chronologically arranged. For example, the meaning estimation section 238 can estimate a meaning relationship showing whether the worker is lifting the material body or putting down the material body.

In the above embodiments, description has been made on the assumption that the information processing apparatus 20 functions as a server on a cloud, but the information processing apparatus 20 is not limited thereto. For example, the information processing apparatus 20 may be configured integrally with the input/output apparatus 10.

### Reference Signs List

1 Information processing system
10 Input/output apparatus
100 Image pickup section
104 Output section
108 Control section
110 Storage section
120 Image
130 Person object
132, 162, 134, 136, 138, 140, 142, 144, 146, 148, 150, 152,164, 168 Feature point
160 Club object
166 Ball object
170, 180 Image object list
174, 184 Meaning relationship list
182 Supplementary information list
20 Information processing apparatus
210 Storage section
212 Relationship information list
232 Image acquisition section
234 Recognition section
236 Supplementary information estimation section
237 Posture estimation section
238 Meaning estimation section
244 Index generation unit
246 Feature point information generation section
272 Load estimation section
273 Posture class judgment section
274 Danger level judgment section
276 Information generation section
278 Time measurement section

## Claims

1. An information processing apparatus comprising:
a storage section storing relationship information in which a spatial relationship among feature points included in a plurality of target objects is associated with meaning information among the plurality of target objects; and
a meaning estimation section estimating, based on a spatial relationship among feature points extracted from a plurality of image objects included in an image and the relationship information, a meaning relationship among the plurality of image objects.

2. The information processing apparatus according to claim 1, wherein
the meaning estimation section estimates the meaning relationship among the plurality of image objects based on supplementary information accompanying the image objects.

3. The information processing apparatus according to claim 2, wherein
the plurality of image objects include an image object of a person; and
the supplementary information includes information about at least any of the person's age, gender, physique, muscle strength, exercise capacity, and wearing or carrying article.

4. The information processing apparatus according to claim 2 or 3, wherein
the plurality of image objects include an image object of a person; and
the supplementary information includes information about at least any of the person's position, physique, posture and orientation estimated based on feature points of the image object of the person.

5. The information processing apparatus according to any one of claims 2 to 4, wherein
the plurality of image objects include an image object of a material body; and
the supplementary information includes information about at least any of a weight, material, weight distribution and gravity center of the material body.

6. The information processing apparatus according to any one of claims 2 to 5, wherein
the plurality of image objects include an image object of a material body; and
the supplementary information includes information about at least any of a position, size, shape and orientation of the material body estimated based on feature points of the image object of the material body.

7. The information processing apparatus according to any one of claims 1 to 6, wherein
the plurality of image objects include an image object of a person and an image object of a material body; and
the meaning relationship among the plurality of image objects includes at least any of an action against the material body by the person, a purpose of the action and an impact that the material body gives to the person.

8. The information processing apparatus according to any one of claims 1 to 7, wherein
the feature points included in the plurality of image objects include a feature point that is given first label information and a feature point that is given second label information, the second label information being in a particular relationship with the first label information; and
the meaning estimation section estimates a meaning relationship between a first image object and a second image object based on a spatial relationship between a feature point that is given the first label information, the feature point being extracted from the first image object, and a feature point of the second image object that is given the second label information, and the relationship information.

9. The information processing apparatus according to any one of claims 1 to 8, wherein
the plurality of image objects include an image object of a person and an image object of a material body; and
the information processing apparatus further comprises an information generation section generating, if a meaning relationship between the image object of the person and the image object of the material body estimated by the meaning estimation section satisfies a particular meaning condition, and a state of the person estimated based on feature points of the image object of the person satisfies a particular state condition, information corresponding to the state.

10. The information processing apparatus according to claim 9, wherein
the state condition includes a condition about the person's posture estimated based on the feature points of the image object of the person; and
the information generation section generates information corresponding to the person's posture.

11. The information processing apparatus according to claim 10, wherein
the state condition includes a condition about a load imposed on the person that is estimated based on the feature points of the image object of the person and the supplementary information about the weight about the image object of the material body; and
the information generation section generates information corresponding to the load.

12. The information processing apparatus according to any one of claims 1 to 11, wherein
the image includes the plurality of image objects;
the meaning estimation section estimates a meaning relationship for each of the plurality of image objects; and
the information processing apparatus further comprises a feature point information generation section generating, for feature points of an image object corresponding to a meaning relationship matching a particular condition, information corresponding to the particular condition.

13. An information processing method by an information processing apparatus, the information processing apparatus comprising a memory and a processor, and the method comprising:
the memory storing relationship information in which a spatial relationship among feature points included in a plurality of target objects is associated with meaning information among the plurality of target objects; and
the processor estimating, based on a spatial relationship among feature points extracted from a plurality of image objects included in an image and the relationship information, a meaning relationship among the plurality of image objects.

14. A program for causing a computer to execute:
storing relationship information in which a spatial relationship among feature points included in a plurality of target objects is associated with meaning information among the plurality of target objects; and
estimating, based on a spatial relationship among feature points extracted from a plurality of image objects included in an image and the relationship information, a meaning relationship among the plurality of image objects.

15. An information processing apparatus comprising:
a storage section storing relationship information in which a spatial relationship among feature points respectively included in a plurality of target objects is associated with meaning information among the plurality of target objects;
a recognition section extracting feature points respectively from a plurality of image objects included in a moving image, the plurality of image objects including an image object of a person and an image object of a material body; and
a meaning estimation section estimating, based on a spatial relationship among the feature points included in the plurality of image objects and the relationship information, a meaning relationship among the plurality of image objects.
